# EUROPEAN PATENT SPECIFICATION

(11) **EP 0 470 088 B1**
(45) Date of publication and mention of the grant of the patent: **08.06.1994**
(21) Application number: 90905804.2
(22) Date of filing: 22.03.1990
(51) Int. Cl.: A01M 13/00, B01J 7/02

(54) **PORTABLE VAPOR-DISPENSING DEVICE**
TRAGBARE DAMPFSPENDERANORDNUNG
DISPOSITIF DE VAPORISATION PORTATIF

(30) Priority: 28.04.1989 US 345340
(43) Date of publication of application: 12.02.1992
(73) Proprietor: S.C. JOHNSON & SON, INC., Racine, WI 53403-5011 (US)
(72) Inventor: BENTLEY, Jeffrey, Morton, Westford, MA 01886 (US); BIRKETT, James, Davis, Mobleboro, ME 04555 (US); TAM, Roy, Siu, Wai, Essex CB10 1AH (GB); MARTIN, John, Racine, WI 53402 (US); WEFLER, Mark, E., Racine, WI 53406 (US)
(74) Representative: Ruschke, Hans Edvard, Dipl.-Ing.
(86) International application number: US9001593
(87) International publication number: WO9013359

(56) References cited:
- FR-A- 2 299 890
- US-A- 2 041 219
- US-A- 2 057 353
- US-A- 2 140 516
- US-A- 3 780 260
- US-A- 4 069 308

## Description

The present invention is generally directed to a device that is specifically designed to contain and to vaporize a volatile fluid.

The present invention, more particularly, is directed to a vapor-dispensing device that is portable.

Such a portable vapor-dispensing device is utilized to vaporize an effective amount of at least a portion of a volatile fluid, such as an evaporable liquid insecticide or an evaporable insect repellent. The portable device of the present invention, moreover, is specifically designed to provide an evaporated-fluid vapor envelope around a user of the device. Thus, the portable device of the present invention can e.g. provide either an envelope of insecticidal vapor or an envelope of insect-repellent vapor, respectively, around such a user for insect-elimination or insect-repellency purposes.

### Background Art

Certain biting insects, such as mosquitos and gnats (to name a few), have for a long time been a bothersome problem to mankind in general. This has been especially noticeable in the pursuit of a variety of outdoor activities. Accordingly, a wide variety of commercial products and insect-elimination methods have been proposed, for the purpose of eliminating and/or repelling these bothersome types of insect pests.

For example, a wide assortment of well-known commercial products are presently available, whereby a consumer can apply an insecticidal or insect-repellent cream, lotion or spray directly onto him/herself or another. Also available to consumers are aerosol-dispensable insecticidally-active and/or insect-repellent sprays for spraying a specific environment. Still further, a wide assortment of well-known stationary electrically-powered insecticidal devices as well as insect-repellent foggers are presently commercially available, for providing an insecticidal or insect-repellent fog for a specific environment.

While such products and methods of eliminating and/or repelling insects have been found to be useful in certain "limited" situations and/or environments, there is presently a need for an insecticidally-active and/or insect-repelling vapor-dispensing device that is "portable" in the sense that it is readily able to be carried on the user's person, or readily able to be moved to a particular user location, for the specific purpose of eliminating and/or repelling most insects in general and bothersome insect pests, such as mosquitos and gnats, in particular.

Such a portable vapor-dispensing device: must be easy to carry; is preferably relatively light-weight; must be self-sufficient; must effectively contain the insecticidally-active and/or insect-repellent liquid ingredient (and thus not allow the contained insecticidally-active or insect-repellent liquid ingredient to escape); must be so designed as to preclude contact of such an ingredient with the person of the user; must be simple to use; and, most importantly, must provide effective insect-elimination and/or insect-repellency zones or regions in the immediate vicinity of the user.

The prior art briefly reviewed and discussed hereinbelow does not disclose or even suggest a vapor-dispensing device, such as is disclosed herein, which is capable of vaporizing a volatile biologically-active fluid, such as an evaporable insecticidally-active and/or an evaporable insect-repellent ingredient, in accordance with the principles of our invention.

Indeed, one particularly notable aspect or feature of our present invention is directed to the controlled vapor-release of a preselected insecticidal or insect-repellent volatile liquid composition. Accordingly, one of the benefits of utilizing our device is that insect repellency and/or insect elimination can be achieved without direct application of such a biologically-active ingredient directly onto the skin of a user.

In contradistinction, many of the prior-art references which we reviewed disclose devices for vaporizing a wide assortment of evaporable substances. Most of these evaporable substances, however, do not possess those biologically-active physical properties mentioned immediately hereinabove. For example, disclosed in U.S. Pat. Nos. 1,968,509 to Tiffany and 2,057,353 to Whittemore, Jr., are evaporable, liquid-medicament substances for inhalation. Furthermore, certain other prior-art references, such as U.S. Pat. Nos. 4,106,698 to Lin and 4,609,245 to Sakschek, disclose vaporizers adapted to be worn directly on the person for release of a preselected fragrance or scent, either for the purpose of "masking" from wild animals the odor of a human or for the purpose of attracting wild animals. No such prior-art vaporizer device of which we are presently aware, however, has been found useful for purposes of providing an effective insecticidally-active or insect-repellent vapor envelope in the immediate environment or region of its wearer.

Still further, while each of U.S. Pat. Nos. 4,163,038 and 4,171,340, both to Nishimura et al., as well as U.S. Pat. Nos. 4,228,124 to Kashihara et al., and 4,663,315 to Hasegawa et al. disclose a variety of fumigating apparatuses, no prior-art reference reviewed by us discloses or even suggests a device which possesses the portable, virtually spill-proof aspects and/or features that we disclose herein.

In particular, one such notable aspect or feature of our present invention is its design and construction whereby a volatile, biologically-active ingredient such as an evaporable liquid insecticide or an evaporable liquid insect repellent is effectively contained yet prevented, by the unique design and construction of our device, from spilling therefrom.

Our present invention thus provides a portable, virtually spill-proof fluid-containment device for effectively containing and vaporizing a volatile biologically-active ingredient such as an evaporable liquid insecticide or an evaporable liquid insect-repellent composition. Vaporization of such a volatile compound, moreover, is in a manner so as to provide an effective envelope of active ingredient-containing vapor around the wearer or user of the device. Such a vapor envelope is effective for purposes of causing either insect elemination (e.g. via insect death), insect repellency, or both.

The heating element in U.S. Patent 2,140,516 to Cowan is composed of inner and outer cylindrical low resistance electrodes in combination with a wick, which combination is in direct contact with a porcelain shell and with a "standard". Both the porcelain shell and said standard are considerable heat sinks which would consume a lot of the heating energy. A similar situation is present in the embodiment of Figure 7. Consequently, a lot of electrical energy will be required to produce the desired steam in the steam generator of Cowan and due to the direct contact of the liquid contained in the wick with the heating element, there is the inherent danger of overheating and decomposing the liquid in case the same was some complex chemical composition like an insecticide.

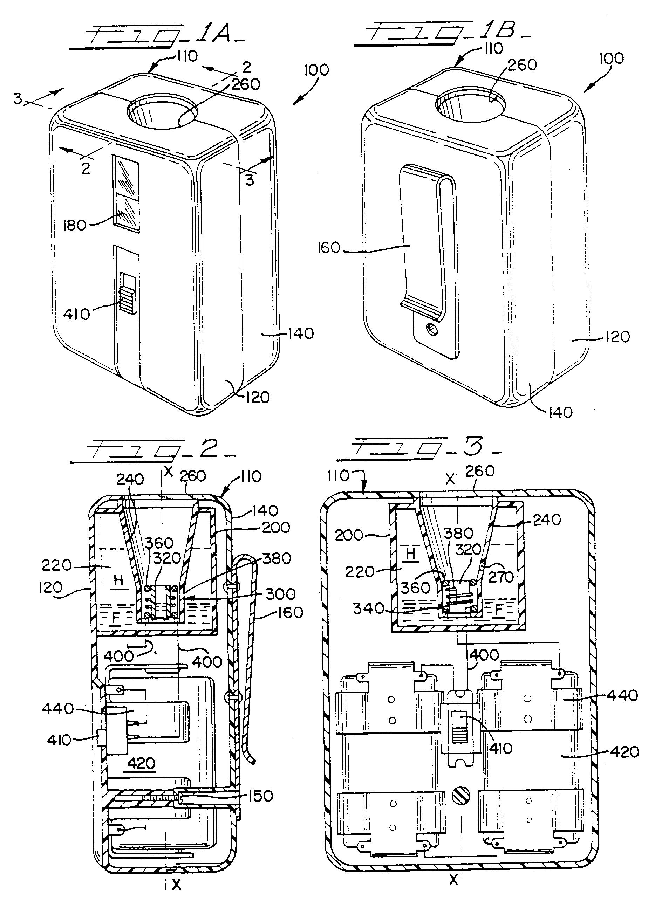

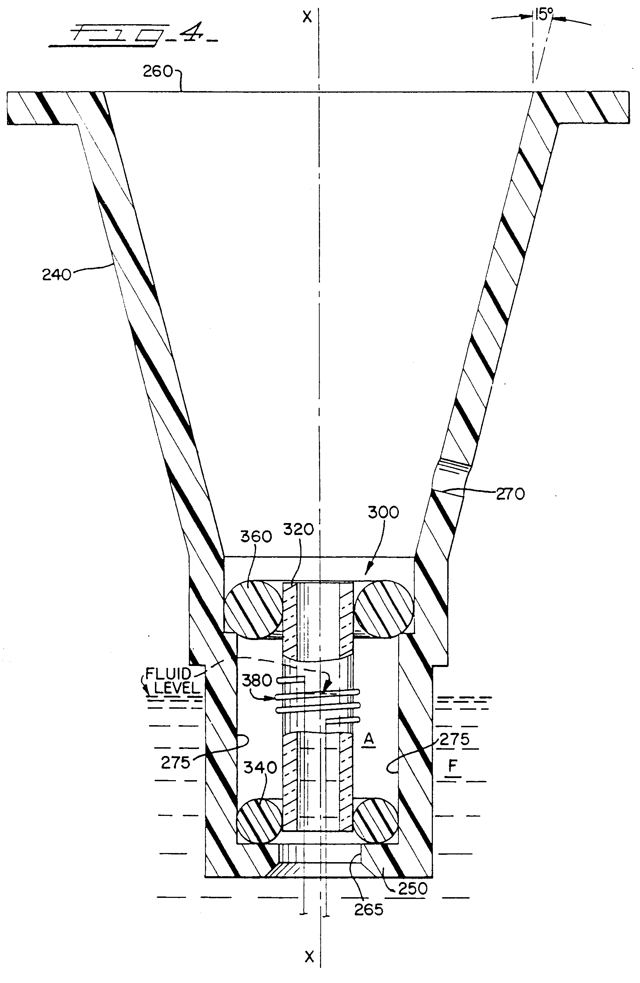

In the apparatus of U.S. Patent 2,041,219 to Wade, the heating element has to heat the fluid contained in the entire container which requires a lot of energy. A similar situation exists in French publication 2,299,890 to Auvray describing a vapor-dispensing device as to the preamble of claim 1: The heating element is submerged in the fluid and in Figure 2 the heating element is connected to a heat-conducting element which is also in direct contact with the fluid. Both prior art apparatuses would heat more fluid than necessary and/or could lead to local over-heating of the insecticide fluid and to thermal decomposition thereof.

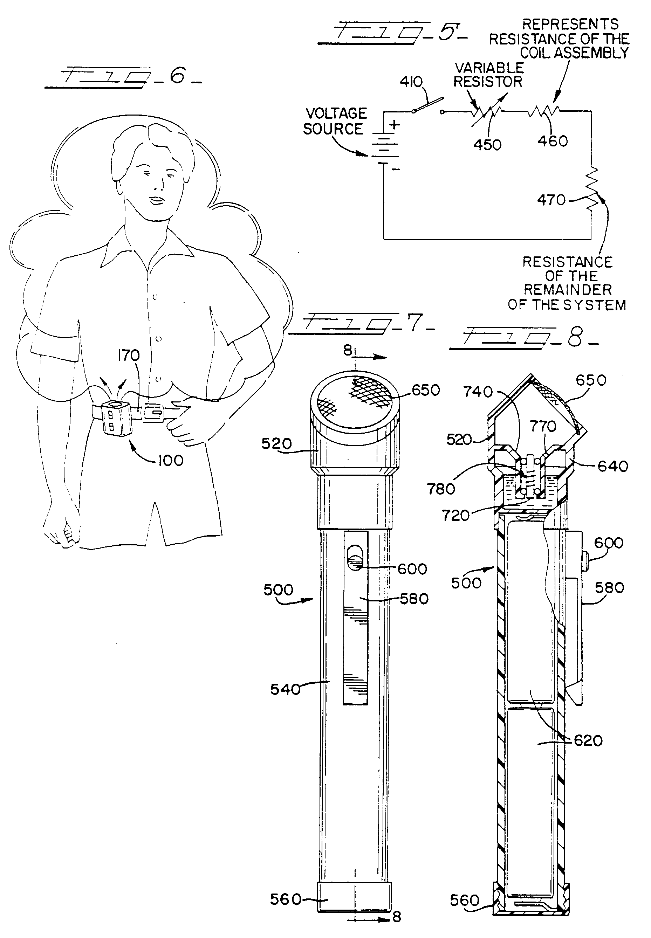

As to the vaporizing unit according to U.S. Patent 2,057,353 to Whittemore, the heating element of Figure 2 thereof would be in direct contact with the fluid by way of the wick D - or in direct communication with the fluid X in Figure 3. Both aspects would create the disadvantages as discussed above, i.e., the unnecessary heating of all of the fluid insecticide or possible local overheating and thermal decomposition thereof.

### Summary Disclosure of Invention

Accordingly, the present invention relates to a portable vapor-dispensing device as described in claim 1, specifically adapted either to be carried on the clothing of a user, or to be moved to the immediate vicinity of such a user, for vaporizing a volatile, biologically-active fluid such as an evaporable liquid insecticide or an evaporable liquid insect repellent.

The vapor-dispensing device of our invention, in general, comprises a housing; and a substantially spill-proof fluid reservoir, defined by the housing, for containing a volatile fluid. The vapor-dispensing device includes heating means, within the housing, for vaporizing at least a portion of the vaporizable, reservoir-contained fluid; and a plume-emitting chimney, also defined by the housing, for enabling vaporized, volatile-fluid vapors to evolve from the housing and to form a vapor envelope about the housing.

The plume-emitting chimney is preferably flared in a manner so as to prevent condensation on the inner chimney walls. The fluid reservoir preferably contains a volatile, biologically-active fluid such as an evaporable insecticidally-active liquid or an evaporable insect-repellent liquid or a biologically-active fluid which is known to possess both insecticidal as well as insect-repellent properties. (See, e.g., U.S. Pat. No. 4,663,346 to Coulston et al.)
The heating means, more particularly, comprises a heating element, and a hollow fluid passageway which communicates with the fluid reservoir and the plume-emitting chimney and which provides a fluid-evaporation zone.

The vapor-dispensing device further includes means for energizing the heating element.

The hollow fluid passageway is disposed within the plume emitting chimney. The heating element is externally circumferentially carried by the hollow fluid passageway and is circumferentially disposed about the fluid-evaporation zone.

When a volatile, biologically-active fluid is present in the fluid-evaporation zone and is heated by the heating element, a biologically-active vapor is released from the device via the chimney thereof, thereby providing an envelope of biologically-active vapor, such as an envelope of insecticidally-active and/or insect-repellent vapor, around a wearer or user of the device.

The substantially spill-proof feature of the fluid reservoir of our present invention, moreover, has been observed to virtually eliminate the likelihood of the occurrence of spillage of the fluid from the device, and thereby substantially reduces the likelihood that such fluid will ever come into direct contact with the user, regardless as to whether the device is tipped a bit, or totally inverted, relative to an initial vertical position. This particular aspect or feature of our present invention has been deemed to be of importance when the device is e.g. used in a rigorous outdoor activity such as hiking.

### Industrial Applicability

While the above summary briefly discusses one particular embodiment of our present invention, such embodiment being specifically designed to be worn by a user, it will be appreciated by those skilled in the art that our invention can readily be incorporated into other types of movable vaporizer devices such as those types of vaporizers which are designed to be placed on table tops, counter tops, desks, night stands, and like locations.

As previously mentioned, one notable aspect or feature of our present invention is the substantially spill-proof nature of the fluid reservoir thereof. This aspect or feature of our present invention is also particularly useful in still other portable vapor-dispensing devices embodying the principles of our present invention, such as those above-mentioned vapor-dispensing devices which are designed to be placed on a table top and like locations. Indeed, such table top-placed or similarly-located types of devices thus allow for convenient transporting of the vapor-dispensing device of our invention to the environment of use without experiencing spillage of the contained vaporizable fluid from the device while en route.

Accordingly, one object of the present invention is to provide a portable vapor-dispensing device able to be carried on the person of a user, or able to be moved in connection with the needs of a user. The device is specifically designed for vaporizing a biologically-active volatile fluid such as an evaporable liquid insecticide or an evaporable liquid insect repellent. Upon vaporizing at least a portion of such a volatile fluid, a biologically-active vapor is released from our portable device. Release of such a biologically active vapor from our device is in a manner so as to provide an envelope of active ingredient-containing vapor around the user for the purpose of eliminating and/or repelling insects.

Yet another object of the present invention is to provide a portable, vapor-dispensing device for vaporizing a volatile biologically-active fluid -- such as an evaporable liquid insecticide or an evaporable liquid insect repellent -- utilizing conduction-heating principles. Such a device, in particular, further includes a substantially spill-proof fluid reservoir for containing the volatile fluid. The device, still more particularly, is so constructed as to preclude leakage and/or spillage of the fluid from the fluid reservoir thereof. The device is thus specifically so constructed as to prevent the contained volatile fluid from coming into direct contact with the person of the user.

A further object of the present invention is to provide a portable, volatile fluid-containing, vapor-dispensing device which can readily be utilized by a user for the purpose of vaporizing the contained volatile fluid, wherein such device may controllably be turned "on" (i.e., its heating element is energized) and turned "off" (i.e., its heating element is de-energized) by the user, as desired, when conditions require, so as to provide for maximum use and efficiency of the thus-contained volatile fluid.

A still further object of the present invention is thus to provide a self-sufficient, portable vapor-dispensing device which is able to provide a biologically-active vapor envelope, effective for causing insect elimination and/or repellency on demand without the need for applying the biologically-active ingredient directly onto the person of the user.

Yet another object of the present invention is to provide a portable vapor-dispensing device readily capable of being carried on the person of the user, or readily capable of being moved to the immediate vicinity of the user, wherein such a portable device is relatively light weight, simple and safe to use, inexpensive to manufacture, and wherein such a device will generally provide for substantial and effective insect elimination and/or repellency from a particular zone or region.

A still further object of our present invention is to provide a self-sufficient, portable, vapor-dispensing device for use in an environment in the immediate vicinity of a user, such as on a table top or a similar location that is in close relation to the user, for the purpose of providing a vapor envelope, upon vaporizing a biologically-active volatile liquid such as an evaporable liquid insecticide or an evaporable liquid insect repellent, whereby an insecticidally-active or insect-repellent vapor is caused to be released from the device in a manner so as to cause, in turn, the elimination and/or repellency of insect pests.

These and other objects of the present invention will become apparent to those skilled in the art upon reading the following description of the presently preferred embodiments and upon referring to the accompanying drawing figures therefor.

### Brief Description of the Drawing Figures

In the accompanying drawing figures,
FIGURE 1A is a front perspective view of one embodiment of the invention;
FIGURE 1B is a rear perspective view of the embodiment shown in FIGURE 1A;
FIGURE 2 is a vertical cross-sectional view, taken generally from the plane 2-2 shown in FIGURE 1A;
FIGURE 3 is another vertical cross-sectional view, taken generally from the plane 3-3 shown in FIGURE 1A;
FIGURE 4 is a vertical cross-sectional view, on an enlarged scale relative to FIGURES 2 and 3, showing one embodiment of the chimney and heating element briefly mentioned hereinabove;
FIGURE 5 is an electrical schematic diagram, on no particular scale, showing the electrical circuitry of that embodiment shown in FIGURES 2 and 3;
FIGURE 6 is a perspective view of the device of FIGURE 1A, on a reduced scale relative thereto, showing the invention in use in a manner so as to provide an envelope of biologically-active vapor around the person of the user;
FIGURE 7 is a front elevational view of another embodiment of the present invention;
FIGURE 8 is a partially-fragmented vertical cross-sectional view, taken generally along the plane 8-8 shown in FIGURE 7;
FIGURE 9 is an upper, perspective view of yet another embodiment of the present invention; and
FIGURE 10 is a partially-fragmented vertical cross-sectional view, taken generally along the plane 10-10 shown in FIGURE 9.

Throughout the drawings, like reference numerals refer to like parts.

### Best Mode For Carrying Out The Invention

While the present invention is susceptible to embodiment in various forms, there are shown in the accompanying drawing figures and hereinafter described in detail a number of presently preferred embodiments of our invention, with the understanding that the present disclosure is to be considered as an exemplification of the present invention without limitation to the specific embodiments illustrated and described herein.

Referring now in detail to the accompanying drawing figures, it will be seen that there is illustrated in FIGURES 1A, 1B, and 2 through 6 one embodiment of a portable vapor-dispensing device, capable of being carried on the person of the user, in accordance with the principles of the present invention. Another embodiment of the present invention, also capable of being carried on the person of the user, is shown in FIGURES 7 and 8. A further embodiment of the invention, readily capable of being moved in connection with the business of the user, is shown in FIGURES 9 and 10.

Referring now initially to FIGURES 1A, 1B, and 2 through 6, the portable vapor-dispensing device 100 of the invention includes a housing 110 which comprises a front housing section 120 and a rear housing section 140 joined together by suitable fastening means such as threaded fastener 150 (FIGURE 2).

The housing 110 can be made of any suitable, light-weight material such as a wide variety of commercially-available plastics that are produced by conventional processes and known to those skilled in the art. Any plastic housing material that is selected, however, must of course be compatible with the particular biologically-active volative fluid that is to be vaporized. In a preferred embodiment, the housing sections 120 and 140 are made of a commercially-available polycarbonate material manufactured by known injection molding methods. The housing 110 of the embodiment shown in FIGURE 1A can thus be of any suitable dimension such that it may be carried on the belt, or inserted in the shirt pocket of the user, whichever is desired. It has been found that one such housing having the following dimensions is generally suitable for both of these purposes: a depth of about 1 and 1/4 inches, a height of about 3 and 1/2 inches, and a width of about 2 and 1/2 inches.

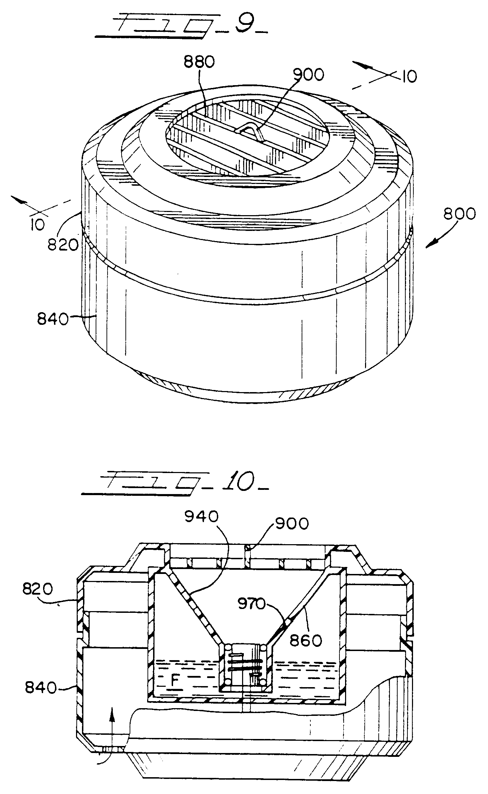

Attached to the device 100, preferably to the rear section 140 of the housing 110, is a clip 160 (FIGURES 1B and 2) which allows the device 100 to be carried directly on the clothing of the user. Such a clip 160, moreover, enables the device 100 to otherwise be located in close relation to the user. For example, the device 100 can be attached directly to the belt 170 of the user, as is shown in FIGURE 6, or the device can be attached to an article in close relation to the user, such as a tent flap, a backpack or a handbag (the three, last-mentioned arrangements not being shown herein).

Referring now, in particular, to FIGURES 2 and 3, a reservoir 200 is arranged within the device 100 for containing a volatile fluid "F", preferably biologically-active, such as an evaporable liquid insecticide or an evaporable liquid insect repellent. The illustrated fluid reservoir 200, which is shown as being unitary with the front housing section 120 (FIGURE 2), is specifically so designed and dimensioned as to enable the device 100 to be substantially spill-proof even when the device 100 is tipped sideways or inverted relative to an initial vertical position, as will be more completely described in greater detail below.

In one preferred embodiment of our present invention, fluid reservoir 200 is either transparent or translucent, and the front housing section 120 includes a window 180 (FIGURE 1A) which functions as a visual indicator of the amount of vaporizable liquid "F" remaining in the device 100.

As was briefly mentioned above, the fluid reservoir 200 is so formed as to be an integral part of the front housing section 120. Those skilled in the art can appreciate that the fluid reservoir can thus be formed by utilizing conventional molding processes such as known injection-molding techniques. Otherwise, the fluid reservoir can be so formed as to be an integral part of the rear housing section, if desired (such embodiment not being shown herein).

Alternatively, the reservoir may be separately formed and then attached to either or both of the housing sections. In the latter case, the reservoir can readily be so adapted as to be replaceable within the housing, thereby allowing for the replacement of such a reservoir after desired vaporization of the contained fluid which, in turn, would further allow for the interchanging of a variety of like-dimensioned reservoirs containing a wide variety of vaporizable liquid substances. Accordingly, the portable vapor-dispensing device of the invention can be so constructed as to be readily re-usable, as will be appreciated by those skilled in the art.

Referring to FIGURE 2, it can be seen that reservoir 200, thus disposed within an upper portion of housing 110, defines a fluid chamber 220 for receiving and containing the vaporizable fluid "F". Integrally depending from an internal upper portion of fluid reservoir 200 is a frusto-conical-shaped funnel-like plume-emitting chimney member 240 which provides a means for release of the vaporized fluid from the device 100. In particular, such vapor release is through upper opening 260, defined by the upper portions of front and rear housing sections 120 and 140 (FIGURES 1A and 1B), to the environment of use.

The chimney member 240 defines a longitudinal axis X-X (FIGURES 1A, 1B and 4). Such a plume-emitting chimney 240 is preferably flared outwardly by at least 15 degrees (FIGURE 4), relative to the longitudinal axis X-X, to prevent liquid condensation on the inner chimney walls. It is to be understood that the housing 110 is preferably so constructed and arranged as to provide the upper opening 260 of chimney 240 along the upper portion of the device 100 (FIGURE 2) to thus allow vaporized, volatile-fluid vapors to evolve from the uppermost portion of device 100.

At the base of chimney 240 is a lower, annular ledge 250 (FIGURE 4) which defines a lower opening 265 for chimney 240. Chimney 240, moreover, is so constructed and arranged as to removably retain a heating means or assembly 300. For example, annular ledge 250, which is generally radially inwardly disposed along the lower, inner circumferential edge portion of plume-emitting chimney 240, is utilized to enable heating assembly 300 to be removably disposed within the lower portion of chimney 240.

An air vent 270 is positioned through the wall of chimney 240 for providing ventilation of the fluid reservoir 200. It is understood that vent 270 is so constructed and arranged through the sidewall of chimney 240 and along the longitudinal axis X-X such that the evaporable fluid "F" in fluid reservoir 200 will not escape through the vent 270 if the device 100 is tipped sideways or inverted relative to the vertical.

Heating assembly 300 comprises a hollow fluid passageway or tube 320 which communicates with the fluid chamber 220 and the chimney 240 (FIGURES 2 and 3). Because of this fluid communication between tube 320 and fluid chamber 220, the liquid level of evaporable fluid "F" within tube 320 is at the liquid level of evaporable fluid "F" in fluid chamber 220. Lower and upper O-rings 340 and 360, disposed within the base portion of chimney 240 (FIGURE 4), are so dimensioned relative to the internal dimensions of chimney 240 and the external dimensions of tube 320 as to provide the fluid communication between tube 320 and fluid chamber 220 (mentioned above) and also so as to provide an air gap "A" within the annular region between tube 320 and the chimney lower walls 275 (FIGURE 4). Lower O-ring 340 is seated on annular ledge 250 and also functions as a seal to prevent leakage of the evaporable fluid "F" from fluid chamber 220. Tube 320 is thus held in place within chimney 240 by O-rings 340 and 360.

The heating assembly 300 further comprises a heating element that is externally circumferentially carried by the fluid passageway or tube 320 and that is circumferentially disposed about the evaporable fluid level in tube 320. It is to be understood that the properties of the fluid passageway or tube 320 are such that it is an electrical insulator. The heat-transfer characteristic of the fluid passageway or tube 320, moreover, is preferably such that a minimal amount of heat passes through the wall of tube 320 in the axial direction (i.e. along axis X-X), and further, such that most of the heat produced by the heating element is conducted radially through the wall of tube 320 into the evaporable fluid contained therein. Circumferentially wrapped about the exterior of tube 320 is an electric wire coil assembly 380 (FIGURE 4) which thus provides heat to the evaporable fluid "F" within heating tube 320. It is desirable that hollow fluid passageway or tube 320 be as thin-wall as possible. The heating assembly 300 thus comprises a tube 320 constructed of a suitable heat-conducting thin-wall material such as glass tubing having an inner diameter, preferably, of between 0.030 and 0.060 inches, and preferably, about 1 millimeter or less in wall thickness.

Within the scope of the present invention, it is contemplated that such a heating element can for example be made of carbon or a like electricity-conducting material, or can be made of an electricity-conducting semi-conductor material which is able to generate heat as a result of electrical current being passed therethrough. Thus, it is contemplated that suitable electricity-conducting materials could for example be electro-deposited or vapor-deposited onto the outer surface of a suitable hollow fluid passageway or tube.

For purposes of illustration, electric wire coil assembly 380, one such heating element, is shown in FIGURE 4 as being loosely circumferentially wrapped about tube 320. It is to be understood, however, if such an electric wire coil is utilized as such a heating element, that the wires of such a loop should be of as thin a wire as is possible. Also, the loops of such a wire should be as tightly wound about the exterior of tube 320 and as close to the actual liquid level in tube 320 as is possible. Lastly, such wire loops should preferably be so circumferentially carried by tube 320, relative to longitudinal axis X-X, as to radially conduct heat into a fluid evaporation zone, defined by and contained within tube 320, which begins approximately at the evaporable-fluid level in tube 320 and which extends downwardly by about 1/2 millimeters therefrom.

Ideally, and in accordance with the principles of our invention, the fluid reservoir 200, which is in fluid communication with tube 320 (FIGURES 2 and 3), is so designed as to provide a fluid-evaporation zone which substantially remains fixed at a predetermined point along the longitudinal axis X-X, when the device 100 is tipped by as much as 35 degrees relative to the vertical and while the contained volatile fluid "F" is being vaporized. (In this regard, it is to be understood that only a relatively minor amount of the initially-contained volatile fluid, i.e. only about 2 to about 8 volume percent, actually vaporizes during the useful life of the portable device 100.) Further, the fluid reservoir 200 is designed such that a major portion of the total volume of the volatile fluid is contained within that void space which is exterior of the chimney 240, with a minor portion of the total volume of the contained volatile fluid being present in the fluid evaporation zone. Still further, the fluid reservoir 200 is so designed as to possess sufficient headspace "H" as to provide sufficient volume (FIGURES 2 and 3) for effectively containing the evaporable fluid "F", with virtually no loss of evaporable fluid "F" from the device via the chimney 240, when the device 100 is totally inverted relative to the vertical. (The axial location of the above-mentioned air vent 270 through the wall of chimney 240, relative to the longitudinal axis X-X of the vapor-dispensing device 100, is of course a design consideration in this regard.) The fluid reservoir 200, shown in FIGURES 2-4, is thus illustrative of these various principles of the present invention.

Coil assembly 380, operatively connected to a power source, is caused to heat up by the passage of a suitable amount of electric current therethrough. As the coil assembly 380 heats up, heat thus passes from coil assembly 380 through tube 320 and thereafter into the vaporizable fluid which is contained in the fluid-evaporation zone within tube 320. The wire coil assembly 380 is connected by conventional, electrical current-conducting wire means 400 (FIGURES 2 and 3) to an electric switch and energy source, in this case, respectively, switch 410 (FIGURES 1A and 5) and batteries 420 (FIGURES 2 and 3). Batteries 420 are held in place by conventional battery support means 440. The batteries 420 are operatively connected to the electric switch 410 in a conventional manner for activating and de-activating the device 100 as desired.

A means for energizing the heating means or assembly 300 is thus preferably arranged within the housing 110 of the device 100. In a preferred embodiment of our invention, batteries 420 (mentioned above) are used for such a purpose. While batteries are the preferred energy source, it should be understood that other energy sources may also be used. For example, those skilled in the art can appreciate that certain electrical-circuitry changes can be made so as to utilize house current as a power source, in lieu of batteries, if desired. Alternatively, solar cells could be utilized as a power source, if desired.

Referring to FIGURE 5, there is shown one preferred embodiment of an electric schematic, embodied within our portable vapor-dispensing device. Specifically, our device 100 incorporates a portable voltage source, such as the above-mentioned batteries 420. The voltage source is controlled by an on/off switch, such as the illustrated switch 410. The device 100 is also preferably provided with a variable resistor 450 for the purpose of controlling heating of the coil assembly 380 (FIGURE 4) which is represented in FIGURE 5 by resistor 460. Thus, regardless of whether the contained vaporizable fluid substance has a low or high boiling-point temperature, the fluid temperature within the fluid-evaporation zone can be controlled so as to provide a desired rate of evaporation of the contained fluid substance. The wires 410 will, of course, have a suitable cross sectional area for such a purpose. The resistance of the remainder of the circuit is represented in FIGURE 5 by resistor 470. The electric system thus further preferably includes variable resistor 460 which represents the heating coil 380 and another resistor 470 which represents the remainder of the electrical circuit, including the wires 400 shown in FIGURES 2 and 3. Thus, the heat passing through the heating coil 380 can readily be controlled to thereby control the evaporation rate of the vaporizable fluid within the fluid-evaporation zone. For example, in an enclosed area, such as a tent, it may be desirable to evaporate the vaporizable fluid slowly, so as to provide an effective insecticidal or insect repellent envelope, without causing breathing discomfort to the occupants of the enclosed area. On the other hand, in an open area, particularly where there is a breeze, it will be desirable to evaporate the vaporizable fluid much more rapidly, for purposes of providing an effective envelope of insecticidal or insect repellent vapor.

Thus, in operation, when the switch 410 of the portable vapor-dispensing device of the invention is set in the "on" position, heating coil 380 provides heat to passageway or tube 320. The vaporizable fluid "F" enters passageway or tube 320, via its underside, and is heated by conduction heating; and the volatile fluid substance which is vaporized by the thus-conducted heat is released to the environment through upper opening 260 of chimney 240.

As set forth above, a primary use of the invention is for providing an envelope of insecticidal or insect repellent fog around the user. Those skilled in the art can appreciate, moreover, that the portable device of our present invention can be used to evaporate medicinal compositions, or water for medicinal or health purposes, for example, if desired.

Those insecticidal or insect-repellent evaporable fluids which are useful in our present invention are limited only to the extent that such fluids are vaporizable, are of a composition which is capable of forming a vapor of sufficient density to provide an envelope of insecticidal or insect repellent vapor around the user, and are non-toxic.

The density of the insecticidal or insect repellent vapor required will depend on a variety of factors. For example, in an enclosed area a less dense fog or envelope will be required. Whereas in a breezy environment, a rather dense fog or envelope might be preferred.

A preferred volatile insecticidal fluid substance is 3-allyl-2-methylcyclopenta-2-ene-4-one-1-yl di-cis/transchrysanthemate, sold under the brand name "Pynamin-forte" by Sumitomo Chemical Co., Ltd. of Japan. A preferred volatile insect-repellent fluid substance is N,N-diethyl metatoluamide (commonly known as deet).

The portable device of the present invention can also be utilized to evaporate other evaporable fluid substances such as evaporable fluid antiseptics, evaporable fluid agricultural fungicides, evaporable fluid plant-growth regulants, evaporable fluid herbicides, and the like. See, for example, U.S. Pat. No. 4,163,038 to Nishimura et al, which is herein incorporated by reference. Additional insecticides and insect repellents useful in the present invention are disclosed in U.S. Pat. No. 4,163,038.

While a primary object of the invention is to provide for a portable insecticidal or insect repellent vapor-dispensing device, it should be understood, as was briefly mentioned above, that still other vaporizable fluids are contemplated within the scope of our present invention, such as air fresheners, perfumes, deodorants, medicaments, and the like.

Another embodiment of our present invention is shown in FIGURES 7 and 8 wherein our invention is so constructed as to be carried, for example, in or attached to a pocket of the user. Specifically, a portable dispenser 500 comprises a directional swivel head 520, a barrel portion 540, a cap portion 560, a clip 580, and an electric on/off switch 600. This embodiment of our invention is powered by penlight batteries 620 and includes a fluid reservoir 640 constructed similar to that of the fluid reservoir 200 in the embodiment of FIGURES 1A, 1B, and 2 through 6. That is, air vent 770 is so located along the sidewall of chimney 740 as to provide a substantially spill-proof fluid reservoir. Swivel head 520 allows the user to choose the direction in which the vapor envelope is released and includes a grill 650, carried by the directional swivel head 520, for providing a more defined release of the vaporized fluid substance. As in the first embodiment previously discussed, the fluid reservoir 640 of the portable vapor dispensing device 500 may be constructed to be either disposable or non-disposable.

In operation, penlight batteries 620 cause electrical wire coil assembly 780 to heat up. Heat is transferred via tube 720 into the fluid-evaporation zone. Thus-evaporated fluid substance evolves via chimney 740 through grill 650 for providing the desired vapor envelope.

The above-described invention provides for a portable vapor-dispensing device which is inexpensive to manufacture and simple and safe to use. The portable vapor-dispensing device avoids user contact with the liquid insecticide or insect repellent due to the substantially spill-proof reservoir and allows the user to activate and de-activate the device, as conditions require, in order to provide for maximum use and efficiency of the insecticide or insect repellent contained by the device. The formation of an envelope of insecticidal or insect repellent vapor around the user provides a new and useful means of insect elimination and repellency in a convenient and efficient manner.

Referring lastly to FIGURES 9 and 10, yet another embodiment of our invention is shown for use in close relation to a user, such as on a table top or the like. More specifically, a portable, self-sufficient vapor dispenser comprises a housing 800 having a top portion 820 and a bottom portion 840 connected by conventional means such as a bayonet-type connecting means. Within housing 800 is a substantially spill-proof fluid reservoir 860 constructed so as to be similar to the above-mentioned fluid reservoir 200 of the embodiment of FIGURES 2 and 3. That is, air vent 970 is so located along the sidewall of chimney 940 as to provide a substantially spill-proof fluid reservoir. The substantially spill-proof fluid reservoir 860 is extremely important as it provides an effective means for evaporation of the vaporizable fluid and also provides for the safe transporting of the device to the environment of use without spilling the vaporizable fluid. The device includes a grill 880 for providing defined release of the vapor. Additionally, the device includes a hook 900 for carrying and/or hanging the device. Similar to the embodiments shown in FIGURES 1A, 1B, and 2-8, the device shown in FIGURES 9 and 10 is battery-operated; and upon activation by an electric switch means (not shown) will provide an envelope of insecticidal or insect repellent vapor around the user for insect elimination or repellency.

What has been illustrated and described herein is a portable vapor-dispensing device. While the vapor-dispensing device of the present invention has been described with reference to a number of preferred embodiments, it is to be understood that the present invention is not to be limited thereto.

## Claims

1. A vapor-dispensing device comprising:
- a housing (110, 800);
- volatile fluid (F);
- a fluid reservoir (200), defined by the housing, for containing the volatile fluid;
- chimney means, disposed within the housing and leading to the exterior thereof, for enabling vaporized, volatile fluid vapors to evolve from the housing and form a vapor envelope about the housing;
- heating means disposed within the housing, the heating means comprising a heating element and an elongated, upstanding fluid passageway which communicates with the fluid reservoir and the chimney means (240), the fluid passageway being a small diameter tube (320) so dimensioned relative to the fluid reservoir (200) and intersecting its fluid level as to enable a minor volumetric portion of the total volume of the volatile fluid contained within the fluid reservoir (200) to be present in said tube (320) as a fluid column, wherein that portion of said tube (320) which is adjacent to the upper surface of the fluid column defines a fluid-evaporation zone, wherein the heating element (380) is circumferentially disposed about an external surface of said tube (320) and thus radially spaced from the fluid-evaporation zone; and
- means operatively connected to the heating element for purposes of energizing the heating element (380) so as to cause the heating element to evaporate that volatile fluid which is present in the fluid column
characterized in that lower and upper O-rings (340) and (360) are provided at the top and bottom end of said tube (320) to hold it in place within the chimney lower walls (275), so as to provide an air gap "A" within an annular region between said tube (320) and the chimney lower walls (275).

2. The vapor-dispensing device of claim 1 wherein the fluid reservoir contains a predetermined quantity of a biologically-active volatile fluid.

3. The vapor-dispensing device of claim 2 wherein the biologically-active volatile fluid is insecticidally active.

4. The vapor-dispensing device of claim 2 wherein the biologically-active volatile fluid is insect repellent.

5. The vapor-dispensing device of claim 1 wherein the means for energizing the heating element comprises at least one battery.

## Patentansprüche

1. Dampfspender mit:
einem Gehäuse (110, 800);
einem flüchtigen Fluid (F);
mit einem vom Gehäuse definierten Fluidbehälter (200) zur Aufnahme des flüchtigen Fluids;
einer innerhalb des Gehäuses angeordneten und zum Äußeren desselben führenden Kaminanordnung, durch die durch Verdampfen erzeugte Dämpfe des flüchtigen Fluids aus dem Gehäuse austreten und es einhüllen können;
einer im Gehäuse befindlichen Heizeinrichtung mit einem Heizelement und einem langgestreckten stehenden Fluidkanal, der mit dem Fluidbehälter und der Kaminanordnung (240) in Strömungsverbindung steht, wobei der Fluidkanal ein Rohr (320) kleinen Durchmessers und relativ zum Fluidbehälter (200) so bemessen ist und dessen Fluidpegel so schneidet, daß ein kleinerer Volumenteil des Gesamtvolumens des im Fluidbehälter (200) enthaltenen flüchtigen Fluids sich als Fluidsäule im Rohr (320) befinden kann, wobei der an den Spiegel der Fluidsäule angrenzende Teil des Rohrs (320) eine Fluid-Verdampfungszone bildet, in der das Heizelement (380) umfangsmäßig um eine Außenfläche des Rohrs (320) herumgelegt und so radial von der Fluid-Verdampfungszone beabstandet ist; und mit
betrieblich mit dem Heizelement verbundenen Mitteln, um das Heizelement (380) zu speisen und es damit zu veranlassen, das in der Fluidsäule befindliche Fluid zu verdampfen, **dadurch gekennzeichnet,** daß am oberen und unteren Ende des Rohrs (320) ein unterer und ein oberer O-Ring (340) und (360) vorgesehen sind, um das Rohr innerhalb der unteren Kaminwandung (275) in der Solllage zu halten und so einen Luftspalt "A" in einem Ringraum zwischen dem Rohr (320) und der unteren Kaminwandung (275) zu bilden.

2. Dampfspender nach Anspruch 1, bei dem der Fluidbehälter eine vorbestimmte Menge eines biologisch aktiven flüchtigen Fluids enthält.

3. Dampfspender nach Anspruch 2, bei dem das biologisch aktive flüchtige Fluid insektizid aktiv ist.

4. Dampfspender nach Anspruch 2, bei dem das biologisch aktive flüchtige Fluid insektenabweisend ist.

5. Dampfspender nach Anspruch 1, bei dem die Einrichtung zum Speisen des Heizelements mindestens eine Batterie aufweist.

## Revendications

1. Dispositif de vaporisation comprenant :
- un boîtier (110, 800) ;
- un liquide volatil (F) ;
- un réservoir de liquide (200) défini par le boîtier, destiné à contenir le liquide volatil ;
- une cheminée disposée à l'intérieur du boîtier et conduisant à l'extérieur de celui-ci pour permettre aux vapeurs de liquide volatil vaporisé de s'échapper du boîtier et de former une enveloppe de vapeurs autour du boîtier ;
- un dispositif chauffant disposé à l'intérieur du boîtier, le dispositif chauffant comprenant un élément chauffant et un passage vertical allongé pour le liquide qui communique avec le réservoir de liquide et la cheminée (240), le passage pour le liquide étant un tube de petit diamètre (320) dimensionné par rapport au réservoir de liquide (200) et rencontrant son niveau de liquide de manière à permettre à une partie volumétrique mineure du volume total du liquide volatil contenu dans le réservoir de liquide (200) d'être présente dans ledit tube (320) sous forme d'une colonne de liquide, la partie dudit tube (320) qui est adjacente à la surface supérieure de la colonne de liquide définissant une zone d'évaporation de liquide, l'élément chauffant (380) étant disposé suivant la circonférence autour d'une surface externe dudit tube (320) et étant ainsi distant radialement de la zone d'évaporation de liquide ; et
- un dispositif relié de manière active à l'élément chauffant afin d'exciter l'élément chauffant (380) pour amener l'élément chauffant à vaporiser le liquide volatil qui est présent dans la colonne de liquide, caractérisé en ce que des joints toriques inférieur et supérieur (340) et (360) sont prévus à l'extrémité supérieure et à l'extrémité inférieure dudit tube (320) pour le maintenir en place à l'intérieur des parois inférieures (275) de la cheminée de manière à former un interstice "A" dans une région annulaire entre ledit tube (320) et les parois inférieures (275) de la cheminée.

2. Dispositif de vaporisation selon la revendication 1, dans lequel le réservoir de liquide contient une quantité prédéterminée d'un liquide volatil biologiquement actif.

3. Dispositif de vaporisation selon la revendication 2, dans lequel le liquide volatil biologiquement actif est actif du point de vue insecticide.

4. Dispositif de vaporisation selon la revendication 2, dans lequel le liquide volatil biologiquement actif est un produit anti-insectes.

5. Dispositif de vaporisation selon la revendication 1, dans lequel le dispositif pour exciter l'élément chauffant comprend au moins une pile.
